# EUROPEAN PATENT APPLICATION

(11) **EP 4 498 564 A1**
(43) Date of publication of application: **29.01.2025**
(21) Application number: 23850281.9
(22) Date of filing: 12.07.2023
(51) Int. Cl.: H02J 7/00, G06F 1/26, G06F 3/06

(54) **DEVICE AND METHOD FOR DETERMINING SOURCE CAPABILITY FOR CHARGING OF ELECTRONIC DEVICE**

(30) Priority: 04.08.2022 KR 20220097532
(71) Applicant: Samsung Electronics Co., Ltd., Suwon-si, Gyeonggi-do 16677 (KR)
(72) Inventor: LEE, Woong, Suwon-si Gyeonggi-do 16677 (KR)
(74) Representative: Appleyard Lees IP LLP
(86) International application number: PCT/KR2023/009952
(87) International publication number: WO 2024/029774

(57) **Abstract**

An electronic device according to an embodiment may comprise: a memory in which computer-executable instructions are stored; and a processor which accesses the memory to execute the instructions, wherein the instructions are configured to: receive, from a charger, a source capability message of the charger; determine whether charging based on the received source capability message is available; in response to a case where the charging based on the source capability message is unavailable, instruct the charger to retransmit a source capability message; and on the basis of the number of times of determination on that the charging based on the source capability message received from the charger is unavailable, instruct the charger to exclude the source capability message and transmit power with a predetermined source capability.

## Description

### TECHNICAL FIELD

The disclosure relates to a method of displaying a screen of an application executed by using at least one of pieces of subscriber identification module information read by an electronic device.

### BACKGROUND ART

A universal serial bus (USB) is an external interface of an electronic device and has been continuously advanced since the introduction of USB 1.0 in 1996. For example, the data transfer performance of the USB has evolved from 1.5 Mbps to 10 Gbps.

Meanwhile, an expanded range of electronic devices supporting the USB and an increase in devices charging batteries by using the USB have increased the demands for improvement of the power supply performance of the USB. The standard that emerged accordingly is USB power delivery (PD).

### DISCLOSURE OF THE INVENTION

### TECHNICAL GOALS

Embodiments of the disclosure may provide the determining of whether charging is available based on a received source capability message, the determining of a target source capability, and the instructing of a charger to transmit power through the target source capability.

### TECHNICAL SOLUTIONS

According to embodiments, an electronic device includes a memory configured to store computer-executable instructions and a processor configured to execute the instructions by accessing the memory, in which, when executed by the processor, the instructions cause the electronic device to receive a source capability message of a charger from the charger, determine whether charging is available based on the received source capability message, in response to charging being unavailable based on the received source capability message, instruct the charger to retransmit a source capability message, and, based on the number of determining that charging is unavailable based on the source capability message received from the charger, exclude the source capability message and instruct the charger to transmit power through a predetermined source capability.

According to embodiments, an operating method, implemented by a processor, of an electronic device includes receiving a source capability message of a charger from the charger, determining whether charging is available based on the received source capability message, in response to charging being unavailable based on the received source capability message, instructing the charger to retransmit a source capability message, and, based on the number of determining that charging is unavailable based on the source capability message received from the charger, excluding the source capability message and instructing the charger to transmit power through a predetermined source capability.

### EFFECTS OF THE INVENTION

Embodiments of the disclosure may determine whether charging is available based on a received source capability message, determine a target source capability, and instruct a charger to transmit power through the target source capability.

### BRIEF DESCRIPTION OF DRAWINGS

FIG. 1 is a block diagram illustrating an electronic device in a network environment, according to various embodiments.
FIG. 2 is a diagram illustrating an operation of an electronic device and a charger, according to various embodiments.
FIG. 3 is a diagram illustrating an operation of an electronic device receiving power from a charger, according to various embodiments.
FIGS. 4 and 5 are diagrams each illustrating an operation of an electronic device determining whether charging based on a source capability message is available, based on a universal serial bus (USB) power delivery (PD) standard, according to various embodiments.
FIG. 6 is a diagram illustrating an operation of an electronic device determining whether charging based on a source capability message is available, based on whether a logical error is in a source capability, according to various embodiments.
FIGS. 7 to 9 are diagrams each illustrating an operation of determining whether charging based on a source capability message is available, based on a voltage related to an electronic device, according to various embodiments.
FIG. 10 is a diagram illustrating an operation of an electronic device displaying whether charging is available through a display module, according to various embodiments.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements and a repeated description related thereto will be omitted.

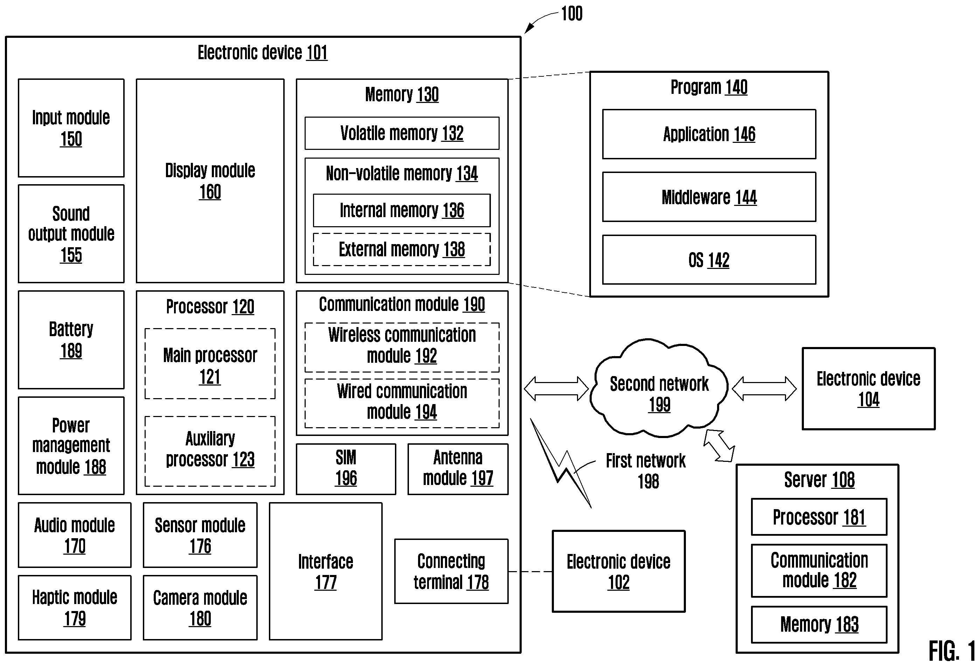

FIG. 1 is a block diagram illustrating an electronic device 101 in a network environment 100, according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The assistance processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101 instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence (AI) model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), and a deep Q-network or a combination of two or more thereof but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to one embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as BluetoothTM, Wi-Fi direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip) or may be implemented as multi-components (e.g., multi-chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196. For reference, the communication module may establish communication with a target device (e.g., the electronic device 104) for mirroring display.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mm Wave antenna module may include a PCB, an RFIC disposed on a first surface (e.g., a bottom surface) of the PCB or adjacent to the first surface and capable of supporting a designated a high-frequency band (e.g., the mm Wave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, a cloud computing, distributed computing, mobile edge computing (MEC), or client-server computing technology may be used, for example. The electronic device 101 may provide ultra-low-latency services using, e.g., distributed computing or MEC. The external electronic device 104 may be a target device with a target display that may output an image. In another embodiment, the external electronic device (e.g., the electronic device 104) may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

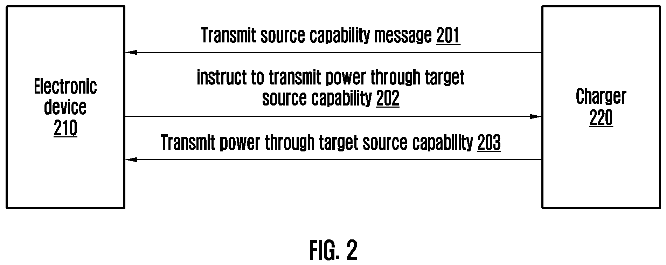

FIG. 2 is a diagram illustrating an operation of an electronic device and a charger, according to various embodiments.

According to an embodiment, an electronic device 210 may communicate with a charger 220 according to a USB type-C standard. The charger 220 may communicate with the electronic device 210 through VBUS pin(s) and CC pin(s). The charger 220 may be connected to a USB type-C cable bundle. A type-C cable bundle may include VBUS pin(s) and CC pin(s) and other pins (not shown), like SBU1, SBU2, or GND.

In operation 201, the charger 220 may transmit a source capability message to the electronic device 210 after the communication between the electronic device 210 and the charger 220 is established. For example, the charger 220 may transmit a source capability message as defined by a USB PD 2.0 standard through CC pin(s). The electronic device 210 may receive the source capability message from the charger 220.

The source capability message may include at least one source capability indicating information on the voltage and current of power that may be transmitted by the charger 220 to the electronic device 210. A source capability may include one of or a combination of two or more of a power data object (PDO) or an augmented power data object (APDO). The PDO is a source capability corresponding to a fixed voltage and may be, for example, a PDO corresponding to a voltage of 5 V and a current of 3 A, a PDO corresponding to a voltage of 9 V and a current of 2 A, or a PDO corresponding to a voltage of 12 V and a current of 1.5 A. The APDO may be a source capability that is programmable in a voltage range that is greater than or equal to a minimum voltage and less than or equal to a maximum voltage. The APDO may be a source capability corresponding to a voltage range between a minimum voltage and a maximum voltage and may be, for example, an APDO corresponding to a voltage range (e.g., a voltage range that is greater than or equal to 3 V and less than or equal to 5.9 V) having a minimum voltage of 3 V and a maximum voltage of 9 V and a current of 3 A.

According to an embodiment, when the electronic device 210 and the charger 220 perform type-C cable communication, a source capability message may have to include an essential vSafe5V PDO (e.g., a PDO corresponding to 5 V).

As described below, the electronic device 210 may determine that charging based on a source capability message is unavailable not including the PDO corresponding to 5 V.

In operation 202, the electronic device 210 may instruct the charger 220 to transmit power through a target source capability. For example, the instruction to transmit power through the target source capability may be transmitted through CC pin(s) of a USB type-C cable bundle.

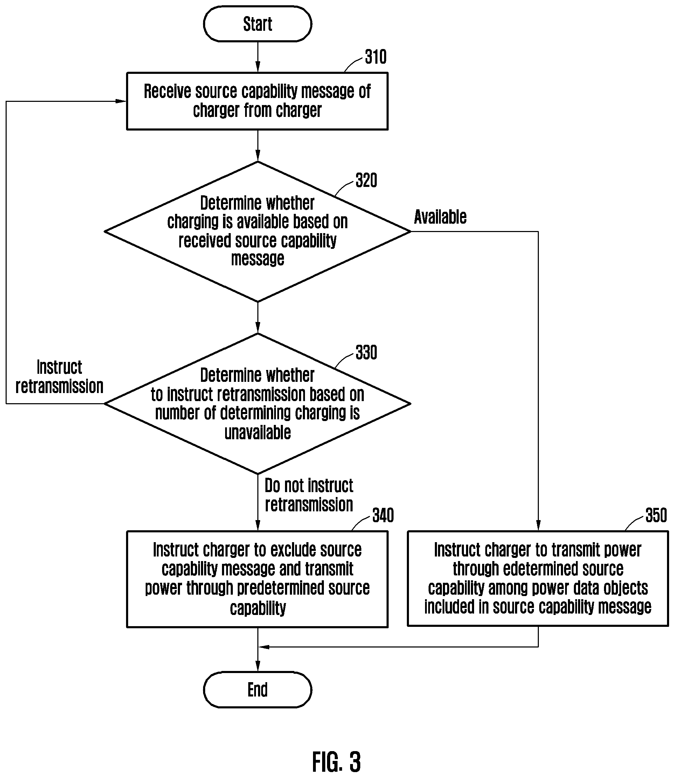

According to an embodiment, the electronic device 210 may select the target source capability among source capabilities included in the source capability message received from the charger 220. In addition, the electronic device 210 may exclude the received source capability message and may determine a predetermined source capability as the target source capability. The operation of electronic device 210, which determines the target source capability, is described below with reference to FIG. 3.

In operation 203, the charger 220 may transmit power to the electronic device 210 through the target source capability. The electronic device 210 may receive power through the target source capability from the charger 220. For example, power may be transmitted from the charger 220 to the electronic device 210 via the VBUS pin(s) of a USB type-C cable.

FIG. 3 is a diagram illustrating an operation of an electronic device receiving power from a charger, according to various embodiments.

In operation 310, a processor (e.g., a processor of the electronic device 210 of FIG. 2) may receive a source capability message from the charger (e.g., the charger 220 of FIG. 2). As described above, the source capability message may include at least one source capability, and a source capability may indicate the performance information of voltage and current of power that may be transmitted by the charger to the electronic device.

In operation 320, the processor may determine (or identify) whether charging is available based on the source capability message received from the charger. The processor may determine whether charging based on a source capability message is available, based at least on a voltage among received source capability messages.

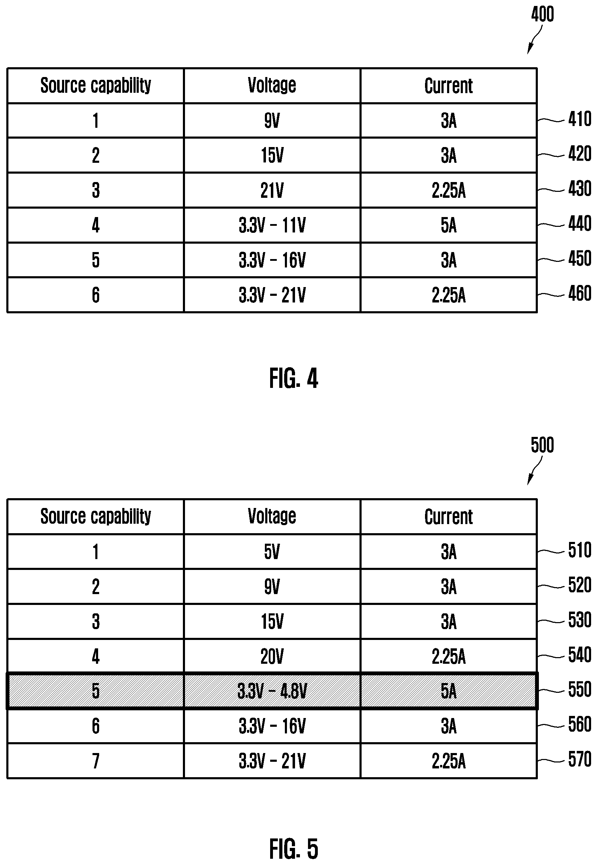

According to an embodiment, the processor may determine whether charging based on a source capability message is available, based on a USB PD standard. For example, if the source capability message received from the charger does not satisfy the USB PD standard, the processor may determine that charging is unavailable based on the source capability message. The operation of determining whether charging based on a source capability message is available, based on the USB PD standard, is described below with reference to FIGS. 4 and 5.

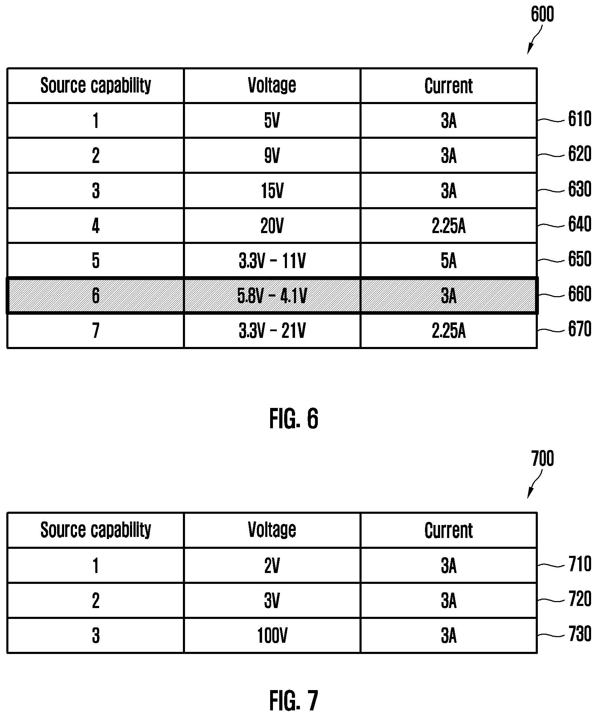

According to an embodiment, the processor may determine whether charging based on a source capability message is available, based on whether a logical error is in a source capability included in the source capability message. For example, if a minimum voltage of an APDO included in a source capability message is less than a maximum voltage, the processor may determine that charging is unavailable based on the source capability message. The operation of determining whether charging based on a source capability message is available, based on whether a logical error is in a source capability, is described below with reference to FIG. 6.

According to an embodiment, the processor may determine whether charging based on a source capability message is available, based on a voltage related to the electronic device. The voltage related to the electronic device may include one of or a combination of one or more of a maximum voltage of power that is receivable by the electronic device or a minimum voltage required for the charging of the electronic device. For example, if a source capability message does not include a source capability of a voltage greater than or equal to the minimum voltage required for the charging of the electronic device, the processor may determine that charging is unavailable based on the source capability message. If a source capability message does not include a source capability of a voltage less than or equal to the maximum voltage that is receivable by the electronic device, the processor may determine that charging is unavailable based on the source capability message. The operation of determining whether charging based on a source capability message is available, based on the maximum voltage of power that is receivable by the electronic device or the minimum voltage required for the charging of the electronic device, is described below with reference to FIGS. 7 to 9.

According to an embodiment, the processor may determine whether charging based on a source capability message is available, based on one of or a combination of two or more of the voltage (e.g., the maximum voltage of power that is receivable by the electronic device or the minimum voltage required for the charging of the electronic device) related to the electronic device, whether the source capability message satisfies the USB PD standard, or whether a logical error is in a source capability included in the source capability message.

For example, the processor may determine whether charging is available based sequentially on whether a logical error is in a source capability included in the source capability message, the voltage related to the electronic device, and whether the source capability message satisfies the USB PD standard. The processor may determine whether charging based on a source capability message is available, based on whether the source capability message satisfies the USB PD standard. Then, if the processor does not determine that charging based on a source capability message is unavailable, based on whether the source capability message satisfies the USB PD standard, the processor may determine whether charging based on a source capability message is available, based on whether a logical error is in a source capability included in the source capability message. Then, if the processor does not determine that charging is unavailable based on whether a logical error is in a source capability included in the source capability message, the processor may determine whether charging based on a source capability message is available, based on the voltage related to the electronic device.

For example, the processor may determine whether charging is available based on one of the voltage related to the electronic device or whether a source capability message satisfies the USB PD standard together with whether a logical error is in a source capability included in the source capability message. The processor may determine whether charging based on a source capability message is available, based on whether a logical error is in a source capability included in the source capability message. Then, if the processor does not determine that charging is unavailable based on whether a logical error is in a source capability included in the source capability message, the processor may determine whether charging based on a source capability message is available, based on the voltage related to the electronic device. Alternatively, if the processor does not determine that charging is unavailable based on whether a logical error is in a source capability included in the source capability message, the processor may determine whether charging based on a source capability message is available, based on the USB PD standard.

In operation 330, in response to charging being unavailable based on the source capability message, the processor may determine whether to request a source capability message again from the charger. For example, based on the number of determining that charging based on a source capability message is unavailable, the processor may determine whether to instruct the charger to retransmit a source capability message. If the number of determining that charging is unavailable based on the source capability message received from the charger is greater than or equal to a threshold number, the processor may omit the instructing of the charger to retransmit a source capability message. If the number of determining that charging is unavailable based on the source capability message received from the charger is less than the threshold number, the processor may instruct the charger to retransmit a source capability message.

According to an embodiment, in response to charging being unavailable based on the received source capability message, the processor may instruct the charger to retransmit a source capability message. If the number of determining that charging is unavailable based on the source capability message from the charger is greater than or equal to a threshold number, the processor may omit the instructing to retransmit a source capability message.

If determining to request a source capability message again, the processor may instruct the charger to retransmit the source capability message. The charger may retransmit the source capability message to the electronic device. According to an embodiment, the processor may resume communication with the charger after blocking the communication with the charger and may instruct the charger to retransmit a source capability message. For example, the processor may resume communication with the charger after blocking the communication with the charger by initializing CC pin(s). If communication with the electronic device is resumed, the charger may retransmit the source capability message to the electronic device.

The processor may repeat the operations of receiving the source capability message and determining whether charging is available for the retransmitted source capability message. Specifically, the processor may receive the source capability message retransmitted from the charger. The processor may determine whether charging is available based on the retransmitted source capability message.

In operation 340, when omitting the instructing to retransmit a source capability message, the processor may instruct the charger to exclude the source capability message received from the charger and transmit power to a predetermined source capability. For example, in response to the number of determining that charging is unavailable based on the source capability message being greater than or equal to the threshold number, the processor may instruct the charger to transmit power through a target source capability independent of a plurality of source capability messages received from the charger.

The target source capability may be predetermined independently of the source capability messages. The target source capability may not be related to the source capability message received from the charger. For example, when type-C cable communication is performed between the electronic device and the charger, the target source capability may be predetermined based on the USB PD standard. For example, the processor may determine the target source capability to have a voltage of 5 V and a current of 3 A, based on a PDO (e.g., a vSafe5V PDO) corresponding to 5 V, which should be included in a source capability message of the charger that complies the USB PD standard.

According to an embodiment, if charging is determined to be unavailable based on a source capability message, the electronic device may perform charging with a predetermined source capability instead of performing charging based on the source capability message. For example, if charging is performed based on a bad source capability message, the electronic device may receive a bad source capability message such that the electronic device may be at least substantially uncharged, slowly charged, or inefficiently charged. If receiving a bad source capability message, the electronic device may determine charging is unavailable based on the bad source capability message, may exclude the bad source capability message, and may instruct the charger to transmit power through a predetermined source capability independently. As a result, even if receiving a bad source capability message, the electronic device may receive power from the charger through the predetermined source capability.

In operation 350, if charging is available based on the source capability message received from the charger, the processor may instruct the charger to transmit power through a source capability determined based on the source capability message.

According to an embodiment, the processor may select a candidate source capability among source capabilities included in the source capability message received from the charger.

For example, the processor may select a candidate source capability based on a maximum voltage of receivable power of the electronic device. As to a PDO corresponding to a fixed voltage, the processor may select a PDO, in which a voltage corresponding to the PDO is less than or equal to the maximum voltage of the receivable power of the electronic device, as a candidate source capability. In addition, as to an APDO corresponding to a voltage range, the processor may select an APDO, in which a voltage range corresponding to the APDO includes a voltage value that is less than the maximum voltage of the receivable power of the electronic device, as a candidate source capability.

For example, the processor may select a candidate source capability based on the minimum voltage required for the charging of the electronic device. As to the PDO corresponding to a fixed voltage, the processor may select a PDO, in which a voltage corresponding to the PDO is greater than or equal to the minimum voltage required for the charging of the electronic device, as a candidate source capability. In addition, as to the APDO corresponding to a voltage range, the processor may select an APDO, in which a voltage range corresponding to the APDO includes a voltage value that is greater than or equal to the minimum voltage required for the charging of the electronic device, as a candidate source capability.

For example, the processor may determine the target source capability among candidate source capabilities, based on the size of power of the candidate source capabilities. The processor may instruct the charger to transmit power through the determined target source capability.

FIGS. 4 and 5 are diagrams each illustrating an operation of an electronic device determining whether charging based on a source capability message is available, based on a USB PD standard, according to various embodiments.

According to an embodiment, the electronic device may communicate with a charger according to the USB PD standard. The charger may transmit a source capability message that satisfies the USB PD standard to the electronic device.

The source capability message transmitted from the charger to the electronic device may include a PDO corresponding to a predetermined voltage. For example, if satisfying the USB PD standard, the source capability message may include a PDO corresponding to 5 V If satisfying the USB PD standard and including an APDO, the source capability message may have a maximum voltage of a voltage range corresponding to the APDO is greater than or equal to a threshold voltage. For example, if satisfying the USB PD standard, the source capability message may have the maximum voltage of the voltage range corresponding to the APDO being greater than or equal to 5.9 V

According to an embodiment, if the source capability message does not satisfy the USB PD standard, a processor of the electronic device may determine that charging is unavailable based on the source capability message.

According to an embodiment, in response to the source capability message not satisfying the USB PD standard, by determining that charging based on a source capability message is unavailable, the electronic device may instruct the charger to retransmit a source capability message or may exclude the received source capability message and instruct the charger to transmit power to a predetermined source capability.

For reference, due to the problem of the charger, the charger may transmit a source capability message that does not satisfy the USB PD standard to the electronic device. The electronic device may receive a source capability message that does not satisfy the USB PD standard. Alternatively, communication between the charger and the electronic device may be performed abnormally without following the USB PD standard, for example, due to a problem of a cable for connecting the charger to the electronic device and/or a problem of the charger or the electronic device. In this case, even if the charger transmits a source capability message that satisfies the USB PD standard to the electronic device, due to a communication problem, the source capability message may be corrupted, and the electronic device may receive the source capability message that does not satisfy the USB PD standard. The source capability message that does not satisfy the USB PD standard may indicate one of or a combination of two or more of the problem of the electronic device, the problem of the charger, or the problem of communication between the electronic device and the charger. Thus, the reliability of the received source capability message may be low.

According to an embodiment, the processor may determine whether the source capability message satisfies the USB PD standard, based at least on a voltage of the source capability message. The processor may determine that charging is available based on the source capability message when the source capability message satisfies the USB PD standard. The processor may determine that charging is unavailable based on the source capability message when the source capability message does not satisfy the USB PD standard.

For example, in response to the PDO corresponding to the predetermined voltage not being included in the source capability message, the processor may determine that charging is unavailable based on the source capability message.

Referring to FIG. 4, the processor may receive a source capability message 400 from the charger. The source capability message 400 may include a first source capability 410, a second source capability 420, a third source capability 430, a fourth source capability 440, a fifth source capability 450, and a sixth source capability 460. The first source capability 410, the second source capability 420, and the third source capability 430 may be PDOs corresponding to a fixed voltage and may respectively correspond to 9 V, 15 V, and 20 V. The fourth source capability 440, the fifth source capability 450, and the sixth source capability 460 may be APDOs corresponding to a voltage range and may respectively correspond to a voltage range having a minimum voltage of 3.3 V and a maximum voltage of 11 V, a voltage range having a minimum voltage of 3.3 V and a maximum voltage of 16 V, and a voltage range having a minimum voltage of 3.3 V and a maximum voltage of 21 V. Based on a PDO corresponding to a predetermined voltage of 5 V not being included in the source capability message 400, the processor may determine that charging is unavailable based on the source capability message 400.

For example, if a source capability message includes an APDO, the processor may determine that charging based on a source capability message is available, based on a maximum voltage of a voltage range corresponding to the APDO. In response to the maximum voltage of the voltage range corresponding to the APDO included in the source capability message being less than a predetermined threshold voltage, the processor may determine charging is unavailable based on the source capability message. If the source capability message includes a plurality of APDOs, in response to a maximum voltage of a voltage range corresponding to at least one APDO being less than the predetermined threshold voltage, the processor may determine charging is unavailable based on the source capability message.

Referring to FIG. 5, the processor may receive a source capability message 500 from the charger. The source capability message 500 may include a first source capability 510, a second source capability 520, a third source capability 530, a fourth source capability 540, a fifth source capability 550, a sixth source capability 560, and a seventh source capability 570. The first source capability 510, the second source capability 520, the third source capability 530, and the fourth source capability 540 may be PDOs corresponding to a fixed voltage and may respectively correspond to 5 V, 9 V, 15 V, and 20 V. The fifth source capability 550, the sixth source capability 560, and the seventh source capability 570 may be APDOs corresponding to a voltage range and may respectively correspond to a voltage range having a minimum voltage of 3.3 V and a maximum voltage of 4.8 V, a voltage range having a minimum voltage of 3.3 V and a maximum voltage of 16 V, and a voltage range having a minimum voltage of 3.3 V and a maximum voltage of 21 V. Based on the maximum voltage of 4.8 V of the voltage range corresponding to the fifth source capability 550 among the APDOs included in the source capability message 500 being less than a threshold voltage of 5.9 V, the processor may determine that charging is unavailable based on the source capability message 500.

FIG. 6 is a diagram illustrating an operation of an electronic device determining whether charging based on a source capability message is available, based on whether a logical error is in a source capability, according to various embodiments.

According to an embodiment, the processor may determine whether charging based on a source capability message is available, based on whether a logical error is in at least one source capability included in the source capability message. The processor may determine charging is unavailable based on the source capability message in response to a logical error being in at least one source capability included in the source capability message.

The processor may determine whether a logical error is in at least one source capability, based at least on a voltage of the source capability message. For example, the source capability message may include an APDO corresponding to a voltage range. The voltage range corresponding to the APDO is expressed by a voltage that is greater than or equal to a minimum voltage and less than or equal to a maximum voltage by using the minimum voltage and the maximum voltage. If the minimum voltage of the voltage range corresponding to the APDO included in the source capability message is greater than the maximum voltage, the processor may determine that the APDO has a logical error.

Referring to FIG. 6, the processor may receive a source capability message 600 from the charger. The source capability message 600 may include a first source capability 610, a second source capability 620, a third source capability 630, a fourth source capability 640, a fifth source capability 650, a sixth source capability 660, and a seventh source capability 670. The first source capability 610, the second source capability 620, the third source capability 630, and the fourth source capability 640 may be PDOs corresponding to a fixed voltage and may respectively correspond to 5 V, 9 V, 16 V, and 20 V. The fifth source capability 650, the sixth source capability 660, and the seventh source capability 670 may be APDOs corresponding to a voltage range and may respectively correspond to a voltage range having a minimum voltage of 3.3 V and a maximum voltage of 11 V, a voltage range having a minimum voltage of 5.8 V and a maximum voltage of 4.1 V, and a voltage range having a minimum voltage of 3.3 V and a maximum voltage of 21 V. The processor may determine charging is unavailable based on the source capability message 600, based on the minimum voltage of 5.8 V of the voltage range exceeding the maximum voltage of 4.1 V of the voltage range corresponding to the sixth source capability 660 among the source capabilities included in the source capability message 600.

FIGS. 7 to 9 are diagrams each illustrating an operation of determining whether charging based on a source capability message is available, based on a voltage related to an electronic device, according to various embodiments.

According to an embodiment, a processor may determine whether charging based on a source capability message is available, based on one of or a combination of two or more of a minimum voltage required for the charging of the electronic device or a maximum voltage of power receivable by the electronic device.

The processor may determine whether each source capability included in a source capability message is usable for the charging of the electronic device. The processor may determine whether a source capability is usable for the charging of the electronic device based on one of or a combination of two or more of the minimum voltage required for the charging of the electronic device or the maximum voltage of power receivable by the electronic device.

For example, the source capability may be a PDO corresponding to a fixed voltage. If a voltage corresponding to a PDO exceeds the maximum voltage of power receivable by the electronic device, the processor may determine that the PDO is not usable for the charging of the electronic device. If a voltage corresponding to a PDO is less than the minimum voltage required for the charging of the electronic device, the processor may determine the PDO is not usable for the charging of the electronic device. If a voltage corresponding to a PDO is greater than or equal to the minimum voltage required for the charging of the electronic device and less than or equal to the maximum voltage of power receivable by the electronic device, the processor may determine that the PDO is usable for the charging of the electronic device.

For example, the source capability may be an APDO corresponding to a voltage range. If a minimum voltage of a voltage range corresponding to an APDO exceeds the maximum voltage of power receivable by the electronic device, the processor may determine that the APDO is not usable for the charging of the electronic device. If a maximum voltage of a voltage range corresponding to an APDO is less than the minimum voltage required for the charging of the electronic device, the processor may determine the APDO is not usable for the charging of the electronic device. If a voltage range corresponding to an APDO includes a voltage value that is greater than or equal to the minimum voltage required for the charging of the electronic device and less than or equal to the maximum voltage of power receivable by the electronic device, the processor may determine that the APDO is usable for the charging of the electronic device. For example, if a minimum voltage of a voltage range corresponding to an APDO is less than or equal to the maximum voltage of power receivable by the electronic device and a maximum voltage of the voltage range corresponding to the APDO is greater than or equal to the minimum voltage required for the charging of the electronic device, the processor may determine that the APDO is usable for the charging of the electronic device.

The processor may determine whether charging based on a source capability message is available, based on whether a source capability included in the source capability message is usable for the charging of the electronic device. For example, if the source capability included in the source capability message is usable for the charging of the electronic device, the processor may determine that charging is available based on the source capability message. If the source capability included in the source capability message is not usable for the charging of the electronic device, the processor may determine that charging is unavailable based on the source capability message.

The processor may receive a source capability message including a plurality of source capabilities from a charger. If at least one source capability among the plurality of source capabilities included in the source capability message is usable for the charging of the electronic device, the processor may determine that charging is available based on the source capability message. If all the plurality of source capabilities included in the source capability message is not usable for the charging of the electronic device, the processor may determine that charging is unavailable based on the source capability message.

Referring to FIG. 7, the processor may receive a source capability message 700 from the charger. The source capability message 700 may include a first source capability 710, a second source capability 720, and a third source capability 730. The first source capability 710, the second source capability 720, and the third source capability 730 may be PDOs corresponding to a fixed voltage and may respectively correspond to 2 V, 3 V, and 100 V.

Based on the voltage of 2 V corresponding to the first source capability 710 being less than a minimum voltage (e.g., 5 V) required for the charging of the electronic device, the processor may determine that the first source capability 710 is not usable for the charging of the electronic device. Based on the voltage of 3 V corresponding to the second source capability 720 being less than the minimum voltage (e.g., 5 V) required for the charging of the electronic device, the processor may determine that the second source capability 720 is not usable for the charging of the electronic device. Based on the voltage of 100 V corresponding to the third source capability 730 exceeding a maximum voltage (e.g., 50 V) of power receivable by the electronic device, the processor may determine that the third source capability 730 is not usable for the charging of the electronic device.

Based on all the source capabilities 710, 720, and 730 included in the source capability message 700 being not usable for the charging of the electronic device, the processor may determine that charging is unavailable based on the source capability message 700.

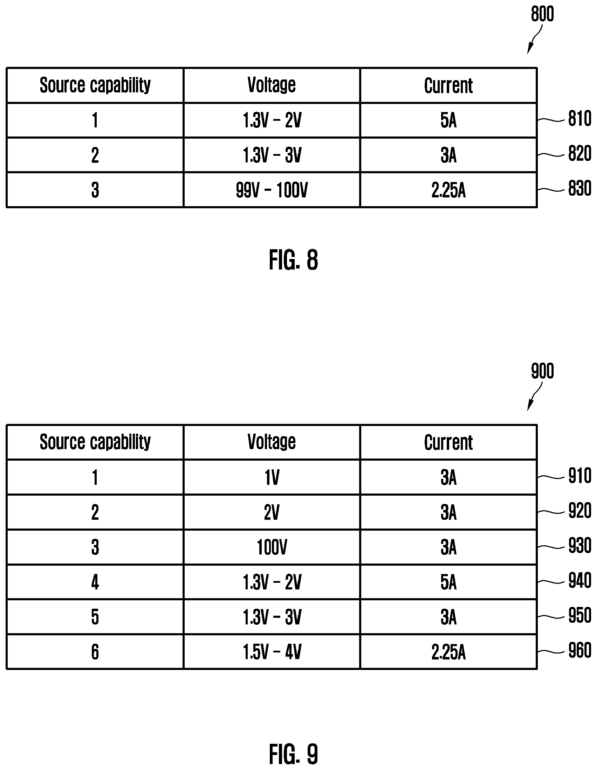

Referring to FIG. 8, the processor may receive a source capability message 800 from the charger. The source capability message 800 may include a first source capability 810, a second source capability 820, and a third source capability 830. The first source capability 810, the second source capability 820, and the third source capability 830 may be APDOs corresponding to a voltage range and may respectively correspond to a voltage range having a minimum voltage of 1.3 V and a maximum voltage of 2 V, a voltage range having a minimum voltage of 1.3 V and a maximum voltage of 3 V, and a voltage range having a minimum voltage of 99 V and a maximum voltage of 100 V

Based on the maximum voltage of 2 V of the voltage range corresponding to the first source capability 810 being less than the minimum voltage (e.g., 5 V) required for the charging of the electronic device, the processor may determine that the first source capability 810 is not usable for the charging of the electronic device. Based on the maximum voltage of 3 V of the voltage range corresponding to the second source capability 820 being less than the minimum voltage (e.g., 5 V) required for the charging of the electronic device, the processor may determine that the second source capability 820 is not usable for the charging of the electronic device. Based on the minimum voltage of 99 V of the voltage range corresponding to the third source capability 830 exceeding the maximum voltage (e.g., 50 V) of power receivable by the electronic device, the processor may determine that the third source capability 830 is not usable for the charging of the electronic device.

Based on all the source capabilities 810, 820, and 830 included in the source capability message 800 being not usable for the charging of the electronic device, the processor may determine that charging is unavailable based on the source capability message 800.

Referring to FIG. 9, the processor may receive a source capability message 900 from the charger. The source capability message 900 may include a first source capability 910, a second source capability 920, a third source capability 930, a fourth source capability 940, a fifth source capability 950, and a sixth source capability 960. The first source capability 910, the second source capability 920, and the third source capability 930 may be PDOs corresponding to a fixed voltage and may respectively correspond to 1 V, 2 V, and 100 V. The fourth source capability 940, the fifth source capability 950, and the sixth source capability 960 may be APDOs corresponding to a voltage range and may respectively correspond to a voltage range having a minimum voltage of 1.3 V and a maximum voltage of 2 V, a voltage range having a minimum voltage of 1.3 V and a maximum voltage of 3 V, and a voltage range having a minimum voltage of 1.5 V and a maximum voltage of 4 V.

Based on the voltage of 1 V corresponding to the first source capability 910 being less than the minimum voltage (e.g., 5 V) required for the charging of the electronic device, the processor may determine that the first source capability 910 is not usable for the charging of the electronic device. Based on the voltage of 2 V corresponding to the second source capability 920 being less than the minimum voltage (e.g., 5 V) required for the charging of the electronic device, the processor may determine that the second source capability 920 is not usable for the charging of the electronic device. Based on the voltage of 100 V corresponding to the third source capability 930 exceeding the maximum voltage (e.g., 50 V) of power receivable by the electronic device, the processor may determine that the third source capability 930 is not usable for the charging of the electronic device.

Based on the maximum voltage of 2 V of the voltage range corresponding to the fourth source capability 940 being less than the minimum voltage (e.g., 5 V) required for the charging of the electronic device, the processor may determine that the fourth source capability 940 is not usable for the charging of the electronic device. Based on the maximum voltage of 3 V of the voltage range corresponding to the fifth source capability 950 being less than the minimum voltage (e.g., 5 V) required for the charging of the electronic device, the processor may determine that the fifth source capability 950 is not usable for the charging of the electronic device. Based on the maximum voltage of 4 V of the voltage range corresponding to the sixth source capability 960 being less than the minimum voltage (e.g., 5 V) required for the charging of the electronic device, the processor may determine that the sixth source capability 960 is not usable for the charging of the electronic device.

Based on all the source capabilities 910, 920, 930, 940, 950, and 960 included in the source capability message 900 being not usable for the charging of the electronic device, the processor may determine that charging is unavailable based on the source capability message 900.

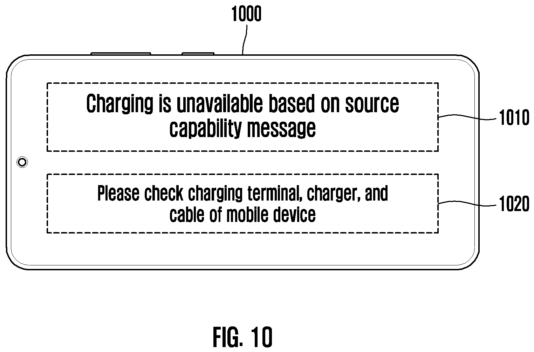

FIG. 10 is a diagram illustrating an operation of an electronic device displaying whether charging is available through a display module, according to various embodiments.

According to an embodiment, an electronic device 1000 (e.g., the electronic device 101 of FIG. 1, the electronic device 210 of FIG. 2, etc.) may display a guidance message through the display module (e.g., the display module 160 of FIG. 1) when charging based on a source capability message is unavailable received from a charger (e.g., the charger 220 of FIG. 2). The guidance message may include a message explaining that charging is unavailable based on the source capability message to a user. The guidance message may include a message suggesting recommended actions to the user in addition to information that charging is unavailable based on the source capability message.

For example, as illustrated in FIG. 10, a processor of the electronic device 1000 may display a guidance message including a message 1010 explaining that charging is unavailable based on the source capability message to the user and a message 1020 suggesting recommended actions to the user through a display.

According to an embodiment, if charging based on a source capability message is unavailable, the electronic device may display a user-friendly display by displaying the message explaining that charging is unavailable based on the source capability message to the user. **In** addition, the electronic device may suggest required actions to the user such that charging may be available based on the source capability message by displaying the message suggesting recommended actions to the user.

According to an embodiment, the electronic device 101; 210 may include the memory 130 storing computer-executable instructions and the processor 120 for executing the instructions by accessing the memory 130.

According to an embodiment, when executed by the processor, the instructions may cause the electronic device to receive a source capability message of the charger 220 from the charger 220.

According to an embodiment, when executed by the processor, the instructions may cause the electronic device to determine whether charging is available based on the received source capability message.

According to an embodiment, when executed by the processor, the instructions may cause the electronic device to, in response to charging being unavailable based on the received source capability message, instruct the charger 220 to retransmit a source capability message.

According to an embodiment, when executed by the processor, the instructions may cause the electronic device to, based on the number of determining that charging is unavailable based on the source capability message received from the charger 220, exclude the source capability message and instruct the charger 220 to transmit power to a predetermined source capability.

According to an embodiment, when executed by the processor, the instructions may cause the electronic device to determine whether charging based on a source capability message is available, based at least on a voltage among the received source capability messages.

According to an embodiment, when executed by the processor, the instructions may cause the electronic device to, in response to a PDO corresponding to a predetermined voltage being not included in the received source capability message of the charger 220, determine charging is unavailable based on the received source capability message of the charger 220.

According to an embodiment, when executed by the processor, the instructions may cause the electronic device to, in response to a maximum voltage of a voltage range corresponding to an APDO included in the received source capability message of the charger 220 being less than a predetermined threshold voltage, determine charging is unavailable based on the received source capability message of the charger 220.

According to an embodiment, when executed by the processor, the instructions may cause the electronic device to, in response to a minimum voltage of a voltage range corresponding to an APDO included in the received source capability message of the charger 220 being greater than the maximum voltage of the voltage range, determine charging is unavailable based on the received source capability message of the charger 220.

According to an embodiment, when executed by the processor, the instructions may cause the electronic device to, based on one of or a combination of two or more of a minimum voltage required for the charging of the electronic device 101; 210 or a maximum voltage of power receivable by the electronic device 101; 210, determine whether a source capability comprised in the received source capability message of the charger 220 is usable for the charging of the electronic device 101; 210.

According to an embodiment, when executed by the processor, the instructions may cause the electronic device to, in response to at least one of source capabilities comprised in the received source capability message of the charger 220 being usable for the charging of the electronic device 101; 210, determine charging is available based on the received source capability message of the charger 220.

According to an embodiment, when executed by the processor, the instructions may cause the electronic device to, in response to a voltage corresponding to a PDO included in the received source capability message of the charger 220 being less than the minimum voltage required for the charging of the electronic device 101; 210, determine that the source capability is not usable for the charging of the electronic device 101; 201.

According to an embodiment, when executed by the processor, the instructions may cause the electronic device to, in response to a maximum voltage of a voltage range corresponding to an APDO included in the received source capability message of the charger 220 being less than the minimum voltage required for the charging of the electronic device 101; 210, determine that the source capability is not usable for the charging of the electronic device 101; 201.

According to an embodiment, when executed by the processor, the instructions may cause the electronic device to receive a source capability message including a PDO and an APDO from the charger 220.

According to an embodiment, when executed by the processor, the instructions may cause the electronic device to, in response to a voltage corresponding to the PDO and a maximum voltage of a voltage range corresponding to the APDO being less than the minimum voltage required for the charging of the electronic device 101; 210, determine that the source capability is not usable for the charging of the electronic device 101; 201.

According to an embodiment, when executed by the processor, the instructions may cause the electronic device to, in response to a voltage corresponding to a PDO included in the received source capability message of the charger 220 exceeding the maximum voltage of the power receivable by the electronic device 101; 210, determine that the source capability is not usable for the charging of the electronic device 101; 201.

According to an embodiment, when executed by the processor, the instructions may cause the electronic device to, in response to a minimum voltage of a PDO included in the received source capability message of the charger 220 exceeding the maximum voltage of the power receivable by the electronic device 101; 210, determine that the source capability is not usable for the charging of the electronic device 101; 201.

According to an embodiment, when executed by the processor, the instructions may cause the electronic device to receive a source capability message including a PDO and an APDO from the charger 220.

According to an embodiment, when executed by the processor, the instructions may cause the electronic device to, in response to a voltage corresponding to the PDO and a maximum voltage of a voltage range corresponding to the APDO being less than the minimum voltage required for the charging of the electronic device 101; 210, determine that the source capability is not usable for the charging of the electronic device 101; 201.

According to an embodiment, when executed by the processor, the instructions may cause the electronic device to resume communication with the charger 220 after blocking the communication with the charger 220 and instruct the charger 220 to retransmit a source capability message.

According to an embodiment, when executed by the processor, the instructions may cause the electronic device to receive the source capability message retransmitted from the charger 220.

According to an embodiment, when executed by the processor, the instructions may cause the electronic device to determine whether charging is available based on the retransmitted source capability message.

According to an embodiment, when executed by the processor, the instructions may cause the electronic device to, in response to the number of determining that charging is unavailable based on the source capability message being greater than or equal to a threshold number, instruct the charger 220 to transmit power to a source capability independent of a plurality of source capability messages received from the charger 220.

According to an embodiment, an operating method, implemented by a processor, of the electronic device 101; 210 may include receiving a source capability message of the charger 220 from the charger 220.

According to an embodiment, the operating method, implemented by a processor, of the electronic device 101; 210 may include determining whether charging is available based on the received source capability message.

According to an embodiment, the operating method, implemented by a processor, of the electronic device 101; 210 may include, in response to charging being unavailable based on the received source capability message, instructing the charger 220 to retransmit a source capability message.

According to an embodiment, the operating method, implemented by a processor, of the electronic device 101; 210 may include, based on the number of determining that charging is unavailable based on the source capability message received from the charger 220, excluding the source capability message and instructing the charger 220 to transmit power to a predetermined source capability.

According to an embodiment, an operation of determining whether charging is available may include determining whether charging based on a source capability message is available, based at least on a voltage among the received source capability messages.

According to an embodiment, the operation of determining whether charging is available may include, in response to a PDO corresponding to a predetermined voltage being not included in the received source capability message of the charger 220, determining charging is unavailable based on the received source capability message of the charger 220.

According to an embodiment, the operation of determining whether charging is available may include, in response to a maximum voltage of a voltage range corresponding to an APDO included in the received source capability message of the charger 220 being less than a predetermined threshold voltage, determining charging is unavailable based on the received source capability message of the charger 220.

According to an embodiment, the operation of determining whether charging is available may include, in response to a minimum voltage of a voltage range corresponding to an APDO included in the received source capability message of the charger 220 being greater than the maximum voltage of the voltage range, determining charging is unavailable based on the received source capability message of the charger 220.

The operation of determining whether charging is available may include, based on one of or a combination of two or more of a maximum voltage of power, determining whether a source capability included in the received source capability message of the charger 220 is usable for the charging of the electronic device 101; 210.

The operation of determining whether charging is available may include, in response to at least one of source capabilities comprised in the received source capability message of the charger 220 being usable for the charging of the electronic device 101; 210, determining charging is available based on the received source capability message of the charger 220.

The above-described hardware devices may be configured to act as one or more software modules in order to perform the operations of the above-described examples, or vice versa.

As described above, although the examples have been described with reference to the limited drawings, a person skilled in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

Therefore, other implementations, various examples, and equivalents to the claims are also within the scope of the following claims.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question and may refer to components in other aspects (e.g., importance or order) is not limited. It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to one embodiment, the module may be implemented in a form of an ASIC.

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the components in the same or similar manner as they are performed by a corresponding one among the components before the integration. According to various example embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101; 210 comprising:
a memory 130 configured to store computer-executable instructions; and
a processor 120 configured to execute the instructions by accessing the memory 130,
wherein, when executed by the processor, the instructions cause the electronic device 101; 210 to
receive a source capability message of a charger 220 from the charger 220,
determine whether charging is available based on the received source capability message,
in response to charging being unavailable based on the received source capability message, instruct the charger 220 to retransmit a source capability message, and,
based on the number of determining that charging is unavailable based on the source capability message received from the charger 220, exclude the source capability message and instruct the charger 220 to transmit power through a predetermined source capability.

2. The electronic device 101; 210 of claim 1, wherein,
when executed by the processor, the instructions cause the electronic device 101; 210 to
determine whether charging based on a source capability message is available, based at least on a voltage among the received source capability message.

3. The electronic device 101; 210 of any one of claims 1 and 2, wherein,
when executed by the processor, the instructions cause the electronic device 101; 210 to,
in response to a power data object corresponding to a predetermined voltage being not comprised in the received source capability message of the charger 220, determine charging is unavailable based on the received source capability message of the charger 220.

4. The electronic device 101; 210 of any one of claims 1 to 3, wherein,
when executed by the processor, the instructions cause the electronic device 101; 210 to,
in response to a maximum voltage of a voltage range corresponding to an augmented power data object comprised in the received source capability message of the charger 220 being less than a predetermined threshold voltage, determine charging is unavailable based on the received source capability message of the charger 220.

5. The electronic device 101; 210 of any one of claims 1 to 4, wherein,
when executed by the processor, the instructions cause the electronic device 101; 210 to,
in response to a minimum voltage of a voltage range corresponding to an augmented power data object comprised in the received source capability message of the charger 220 being greater than the maximum voltage of the voltage range, determine that charging of the charger 220 based on the received source capability message is unavailable.

6. The electronic device 101; 210 of any one of claims 1 to 5, wherein,
when executed by the processor, the instructions cause the electronic device 101; 210 to,
based on one of or a combination of two or more of a minimum voltage required for the charging of the electronic device 101; 210 or a maximum voltage of power receivable by the electronic device 101; 210, determine whether a source capability comprised in the received source capability message of the charger 220 is usable for the charging of the electronic device 101; 210, and,
in response to at least one of source capabilities comprised in the received source capability message of the charger 220 being usable for the charging of the electronic device 101; 210, determine charging is available based on the received source capability message of the charger 220.

7. The electronic device 101; 210 of any one of claims 1 to 6, wherein,
when executed by the processor, the instructions cause the electronic device 101; 210 to,
in response to a voltage corresponding to a power data object comprised in the received source capability message of the charger 220 being less than the minimum voltage required for the charging of the electronic device 101; 210, determine that the source capability is not usable for the charging of the electronic device 101; 201.

8. The electronic device 101; 210 of any one of claims 1 to 7, wherein,
when executed by the processor, the instructions cause the electronic device 101; 210 to,
in response to a maximum voltage of a voltage range corresponding to an augmented power data object comprised in the received source capability message of the charger 220 being less than the minimum voltage required for the charging of the electronic device 101; 210, determine that the source capability is not usable for the charging of the electronic device 101; 201.

9. The electronic device 101; 210 of any one of claims 1 to 8, wherein,
when executed by the processor, the instructions cause the electronic device 101; 210 to
receive a source capability message comprising a power data object and an augmented power data object from the charger 220, and,
in response to a voltage corresponding to the power data object and a maximum voltage of a voltage range corresponding to the augmented power data object being less than the minimum voltage required for the charging of the electronic device 101; 210, determine that the source capability is not usable for the charging of the electronic device 101; 201.

10. The electronic device 101; 210 of any one of claims 1 to 9, wherein,
when executed by the processor, the instructions cause the electronic device 101; 210 to,
in response to a voltage corresponding to a power data object comprised in the received source capability message of the charger 220 exceeding the maximum voltage of the power receivable by the electronic device 101; 210, determine that the source capability is not usable for the charging of the electronic device 101; 201.

11. The electronic device 101; 210 of any one of claims 1 to 10, wherein,
when executed by the processor, the instructions cause the electronic device 101; 210 to,
in response to a minimum voltage of a power data object comprised in the received source capability message of the charger 220 exceeding the maximum voltage of the power receivable by the electronic device 101; 210, determine that the source capability is not usable for the charging of the electronic device 101; 201.

12. The electronic device 101; 210 of any one of claims 1 to 11, wherein
the instructions are configured to
resume communication with the charger 220 after blocking the communication with the charger 220 and instruct the charger 220 to retransmit the source capability message,
receive the source capability message retransmitted from the charger 220, and
determine whether charging is available based on the retransmitted source capability message.

13. The electronic device 101; 210 of any one of claims 1 to 12, wherein
the instructions are configured to,
in response to the number of determining that charging is unavailable based on the source capability message being greater than or equal to a threshold number, instruct the charger 220 to transmit power to a source capability independent of a plurality of source capability messages received from the charger 220.

14. An operating method, implemented by a processor, of an electronic device 101; 210, the operating method comprising:
receiving a source capability message of a charger 220 from the charger 220;
determining whether charging is available based on the received source capability message;
in response to charging being unavailable based on the received source capability message, instructing the charger 220 to retransmit a source capability message; and,
based on the number of determining that charging is unavailable based on the source capability message received from the charger 220, excluding the source capability message and instructing the charger 220 to transmit power through a predetermined source capability.

15. A non-transitory computer-readable storage medium storing instructions that, when executed by a processor, cause the processor to perform the operating method of claim 14.
